# EUROPÄISCHE PATENTSCHRIFT

(11) **EP 0 970 422 B1**
(45) Veröffentlichungstag und Bekanntmachung des Hinweises auf die Patenterteilung: **13.11.2002**
(21) Anmeldenummer: 98907859.7
(22) Anmeldetag: 23.01.1998
(51) Int. Cl.: G06F 9/445

(54) **ANORDNUNG ZUR ÜBERTRAGUNG VON PROGRAMMEN**
DEVICE FOR TRANSFERRING PROGRAMS
DISPOSITIF POUR TRANSFERER DES PROGRAMMES

(30) Priorität: 27.03.1997 DE 19713060
(43) Veröffentlichungstag der Anmeldung: 12.01.2000
(73) Patentinhaber: SIEMENS AKTIENGESELLSCHAFT, 80333 München (DE)
(72) Erfinder: HOFMANN, Ludwig, D-85304 Ilmmünster (DE)
(86) Internationale Anmeldenummer: DE9800219
(87) Internationale Veröffentlichungsnummer: WO98044412

(56) Entgegenhaltungen:
- DE-A- 4 321 381
- US-A- 5 418 837
- US-A- 5 469 573

## Beschreibung

Die Erfindung bezieht sich auf eine Anordnung zur Übertragung von Programmen auf ein elektronisches Gerät. Der Begriff "Programm" bezieht sich hier insbesondere auf Software bzw. Firmware die zum Betreiben des elektronischen Gerätes verwendet wird.

Nach dem Verkauf eines elektronischen Gerätes, das über einen Prozessor zur Verwendung von Programmen verfügt (z.B. ein Mobilfunkendgerät), an den Endkunden tritt häufig der Fall ein, daß neue Programme, Software oder Firmware auf das elektronische Gerät übertragen werden soll. Dabei kann es sich beispielsweise um Programme handeln, die neue zusätzliche Funktionen des elektronischen Gerätes ermöglichen oder um Programm-Updates, die die Eigenschaften des elektronischen Gerätes verbessern. Bisher wurde dieses Problem entweder gelöst, indem man die Programme von einem PC über eine serielle Schnittstelle auf das elektronische Gerät übertragen hat, oder ROM- bzw. EPROM-Bausteine ausgewechselt hat. Bei anderen Verfahren werden Programme, die beispielsweise auf einer Diskette gespeichert sind von einem eigens für diesen Zweck vorgesehenen Diskettenlaufwerk gelesen. All diese Verfahren sind jedoch mit hohem Aufwand verbunden und setzen teilweise spezielle Hardware oder Peripheriegeräte voraus. Außerdem ist eine korrekte Erfassung der Anzahl der vom Händler verkauften bzw. auf Geräte (z.B Mobilfunkendgeräte) übertragenen Programme durch diese Verfahren nur schwer möglich.

Der Erfindung liegt daher die Aufgabe zugrunde, ein Verfahren und eine Anordnung zur Durchführung des Verfahrens anzugeben, mit denen Programme mit geringem Aufwand und möglichst praktisch auf elektronische Geräte übertragen werden können.

Diese Aufgabe wird durch eine Anordnung mit Merkmalen nach Anspruch 1 gelöst. Dabei werden Programme, die auf einer Einsteckvorrichtung gespeichert sind, nach dem Einstecken der Einsteckvorrichtung in das elektronische Gerät auf das elektronische Gerät übertragen, wobei die Übertragung von einer Steuereinheit in der Einsteckvorrichtung gesteuert wird.

Dies hat den Vorteil, daß die Übertragung nicht vom Gerät gesteuert werden muß und daher das Gerät nicht mit zusätzlicher Hard- oder Software versehen werden muß.

Bei einem bevorzugten Ausführungsbeispiel ist die Einsteckvorrichtung an einen - am elektronischen Gerät für andere Zwecke schon vorhandenen - Schacht zur Aufnahme von Einsteckkarten und die zugehörige Schnittstelle angepaßt und die Steuereinheit steuert die Übertragung der Programme und paßt die Übertragung an die dieser Scnittstelle entsprechende Ein/Ausgabe-Schnittstelle bzw. das entsprechende Übertragungsprotokoll an. Dadurch wird erreicht, daß zur Programmübertragung eine bereits bestehende Schnittstelle benützt werden kann, d.h. es können Programme übertragen werden, ohne eigens für diese Zwecke eine Schnittstelle vorsehen zu müssen.

Eine weitere vorteilhafte Ausführungsvariante sieht vor, daß auf der Einsteckvorrichtung zusätzlich ein nichtflüchtiger Speicher vorgesehen ist, der die Anzahl der Übertragungen des Programms auf elektronische Geräte erfaßt und die Übertragung des Programms nicht mehr zugelassen wird, wenn eine bestimmte Anzahl von Übertragungen durchgeführt wurde. Dies bringt in der Praxis beispielsweise den Vorteil, daß ein Händler mit einer vom Hersteller erworbenen Einsteckvorrichtung ein neues Programm nur auf eine bestimmte Anzahl von elektronischen Geräten von Endkunden übertragen kann. Dadurch wird der Vertrieb dieser Programme und die zugehörige Abrechnung enorm vereinfacht.

Durch die Erfindung kann, insbesondere wenn das elektronische Gerät beispielsweise zur Benutzer-Identifizierung schon Einsteckkarten benützt, wie es in aktuellen zellularen Mobilfunknetzen der Fall ist (SIM-Karte), erreicht werden, daß eine bestehende Vorrichtung zur Aufnahme von Einsteckkarten und die zugehörige Schnittstelle (SIM-Schnittstelle) benützt werden kann, um Programme zu übertragen. Die Steuereinheit steuert dabei die Übertragung der Programme und ermöglicht, daß beispielsweise eine bestehende Ein-/Ausgabe-Schnittstelle (SIM-Ein-/Ausgabe-Schnittstelle) und das zugehörige Übertragungsprotokoll (SIM-Protokoll) benützt werden kann.

Weiterbildungen der Erfindung ergeben sich aus den Unteransprüchen. Eine Einsteckvorrichtung ist in den Ansprüchen 5 bis 7 angegeben.

DE-A-43 21 381 beschreibt in einer Ausführung eine Anordnung (siehe Figuren 2 und 4) mit der ein Austausch oder eine Änderung von Software in Geräten (G) mit einer Kartenschnittstelle (KS) vorgenommen werden kann. Die Anordnung besteht aus dem Gerät mit der Kartenschnittstelle und einer Karte (SIM-A) die einen Speicher enthält. Der Speicher (M) speichert für das Gerät zu tauschende oder zu ändernde Software. Nachdem die Karte in die Kartenschnittstelle des Gerätes eingeführt ist, erkennt das Gerät mittels eines Programms (SKP) das in dem Gerät imptementiert ist daß ein Austausch oder eine Änderung der Software vorgenommen werden soll. Die neue Software wird dann mittels dieses Programms aus dem Speicher (M) ausgelesen und in das Gerät implementiert. Dieses Dokument offenbart eine Anordnung, von dem sich der Gegenstand des Anspruchs 1 dadurch unterscheidet, daß die Übertragung von Programmen von einer Steuereinheit in der Karte (Einsteckvorrichtung) gesteuert wird.

Zur Erläuterung von Ausführungsformen der Erfindung dienen die nachstehend aufgelisteten Figuren.
Es zeigen:
FIG 1 den Ablauf einer bevorzugten Ausführungsvariante der Erfindung

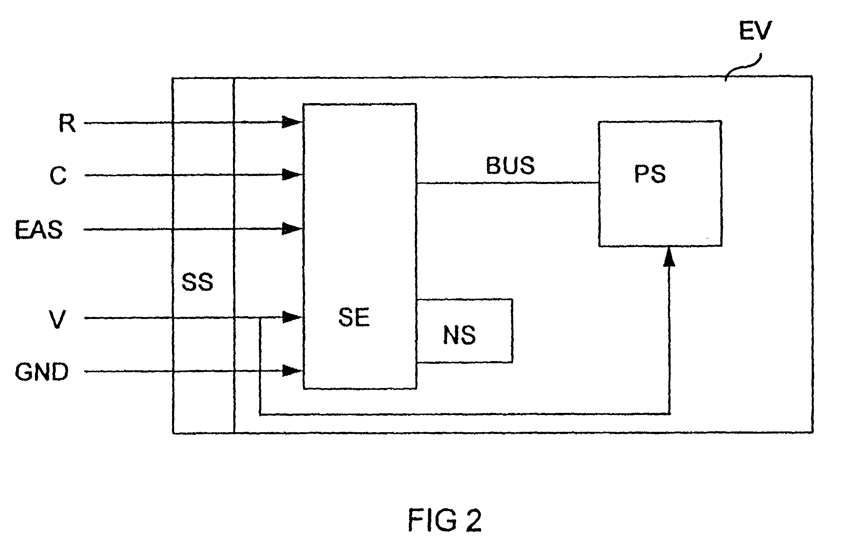

FIG 2 eine schematische Darstellung einer Ausführungsform einer erfindungsgemäßen Vorrichtung

Die Erfindung wird im folgenden anhand bevorzugter Ausführungsbeispiele und mit Hilfe der Figuren näher beschrieben.

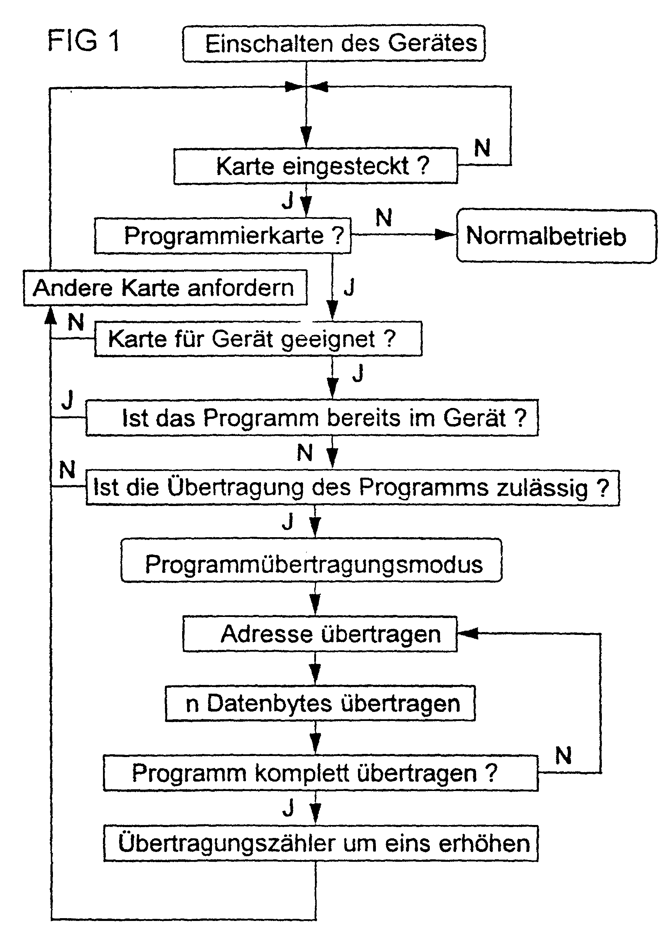

Der Ablauf einer Übertragung von Programmen auf ein elektronisches Gerät, insbesondere ein Kommunikationsendgerät ist in Figur 1 dargestellt. Nach dem Einschalten des Gerätes wird überprüft, ob eine Einsteckvorrichtung (Karte) eingesteckt ist. Handelt es sich bei der Karte nicht um eine Programmierkarte, sondern beispielsweise um eine SIM-Karte so wird der Normalbetrieb des Gerätes aufgenommen.
Handelt es sich bei der Karte allerdings um eine Programmierkarte, also eine Karte, auf der ein Programm gespeichert ist, das auf das Gerät übertragen werden soll, so wird zunächst überprüft, ob die Karte für das vorliegende Gerät geeignet ist. Liegt keine Eignung vor, so wird eine andere Karte angefordert. Ist die Karte geeignet, so wird überprüft, ob das Programm bereits im Gerät gespeichert ist. Falls das Programm bereits im Gerät gespeichert ist, so wird eine andere Karte angefordert. Ansonsten wird überprüft, ob eine Übertragung zulässig ist. Dazu wird die Anzahl der zulässigen Programmübertragungen mit der Anzahl der bereits erfolgten Programmübertragungen verglichen. Diese beiden Werte können dabei auf nichtflüchtigen Speichern gespeichert werden. Die Zählung der Programmübertragungen kann auch durch einen Zähler realisiert werden. Falls sich herausstellt, daß eine weitere Programmübertragung zulässig ist, wird das Gerät und die Karte in den Programmübertragungsmodus geschaltet.
Dann wird die erste Adresse übertragen bei der der erste Teil des Programms im Gerät gespeichert werden soll. Darauf werden die n Datenbytes des ersten Programmteils auf das Gerät übertragen. Diese letzten beiden Schritte werden solange wiederholt, bis das Programm komplett übertragen ist.
Schließlich wird die Anzahl der Programmübertragungen um eins erhöht, der neue Wert auf der Einsteckkarte gespeichert und eine andere Karte angefordert.
Ein Dialog zwischen Nutzer und Kommunikationsendgerät zur Steuerung des Verfahrensablaufs kann dabei über ein Display erfolgen.

Da ein Kommunikationsendgerät für aktuelle Mobilfunknetze wie GSM über einen Schacht zur Aufnahme von SIM-Karten für die Nutzer-Identifizierung verfügt kann eine Einsteckvorrichtung in vorteilhafter Ausgestaltung die Form einer derartigen Einsteckkarte haben. Darüber hinaus kann die Steuereinheit auf der Einsteckkarte das bekannte Übertragungsprotokoll der SIM-Schnittstelle verwenden, um die Programmübertragung abzuwikkeln.

Bei einer bevorzugten Ausführungsvariante der Erfindung beschränkt sich die Steuerung der Übertragung von Programmen durch die Steuereinheit auf der Einsteckvorrichtung darauf, zu überprüfen, ob es aufgrund der Anzahl der bisherigen Programmübertragungen noch zulässig ist, eine weitere Übertragung durchzuführen.

Eine der erfindungsgemäßen Anordnung entsprechende Einsteckvorrichtung (EV) sieht einen Programm-Speicher (PS) vor, auf dem die zu übertragenden Programmdaten gespeichert sind. Dieser kann vorzugsweise als Flash-Baustein oder als ROM ausgeführt werden. Ein Flash-Baustein hat dabei den Vorteil, daß die Karte wiederverwendet werden kann. Außerdem verfügt die Einsteckvorrichtung über eine Steuereinheit (SE) zur Steuerung der Übertragung der Programme auf das elektronische Gerät und zur Anpassung der Übertragung an eine vorhandene Ein/Ausgabe-Schnittstelle (EAS), beispielsweise eine SIM-Ein/Ausgabe-Schnittstelle eines Mobilfunkendgerätes. Der Programmspeicher (PS) kann dabei über einen Bus (BUS) mit der Steuereinheit (SE) verbunden sein oder als Teil der Steuereinheit ausgeführt werden (monolithisch). Die Steuereinheit (SE) selbst kann unabhängig von dem Programm als digitale Hardware oder als Mikrocontroller mit integriertem Programm realisiert werden.

Über eine Ein/Ausgabe-Schnittstelle (EAS) wird das Übertragungsprotokoll abgewickelt auf dessen Basis die Programme übertragen werden. Außerdem ist denkbar, daß die Schnittstelle (SS) auch für eine passende Stromversorgung (V, GND) der Einsteckvorrichtung sorgt und die Einsteckvorrichtung mit einer Reset- (R) und einer Taktsteuerung (C) versorgt.

Bei einer Ausführungsvariante einer erfindungsgemäßen Anordnung entspricht die Ein/Ausgabe-Schnittstelle (EAS) einer SIM-Ein-/Ausgabe-Schnittstelle von Mobilfunkendgeräten und das zugehörige Übertragungsprotokoll einem SIM-Protokoll.

Eine weitere erfindungsgemäße Anordnung ist darüber hinaus mit einem nichtflüchtigen Speicher (NS) versehen, der die Anzahl der Übertragungen eines Programms erfaßt. Alternativ zum nichtflüchtigen Speicher (NS) kann dazu auch ein Teil des Programmspeichers (PS) verwendet werden. In diesem Fall können dann dafür festgelegte Bits nach einer Programmübertragung gelöscht werden (bitweiser Zähler).

Der Fachmann kann anhand der vorliegenden Beschreibung leicht weitere Anwendungen der oben beschriebenen Ausführungsbeispiele konzipieren und ausführen. So kann diese Anordnung auch auf Geräte der Unterhaltungselektronik, der Automobilelektronik oder auf Haushaltsgeräte angewendet werden. Die Anordnung kann grundsätzlich auf alle Geräte angewendet werden, die mit einem Prozessor versehen sind und die man daher durch neue Programme mit neuen Funktionen ausstatten kann oder deren bestehende Eigenschaften verbessert werden können.

## Patentansprüche

1. Anordnung zur Übertragung von Programmen auf ein elektronisches Gerät, umfassend:
- eine Einsteckvorrichtung, auf der ein zu übertragendes Programm gespeichert ist,
- einen am elektronischen Gerät vorhandenden Schacht zur Aufnahme der Einsteckvorrichtung mit zugehöriger Schnittstelle,
**gekennzeichnet durch**
eine Steuereinheit (SE), welche in der Einsteckvorrichtung enthalten ist, zur Steuerung der Übertragung des Programms auf das elektronische Gerät nach dem Einstecken der Einsteckvorrichtung in den Schacht.

2. Anordnung nach Anspruch 1,
**dadurch gekennzeichnet,**
**daß** die Einsteckvorrichtung an einen - am elektronischen Gerät für andere Zwecke schon vorhandenen - Schacht zur Aufnahme von Einsteckkarten und die zugehörige Schnittstelle angepaßt ist und die Steuereinheit die Übertragung der Programme an die diesem Schacht entsprechende Ein-/Ausgabe-Schnittstelle anpaßt und steuert.

3. Anordnung nach einem der Ansprüche 1 bis 2,
**dadurch gekennzeichnet,**
**daß** auf der Einsteckvorrichtung zusätzlich ein nichtflüchtiger Speicher vorgesehen ist, der die Anzahl der Übertragungen des Programms auf elektronische Geräte erfaßt und die Übertragung des Programms nicht mehr zugelassen wird, wenn eine bestimmte Anzahl von Übertragungen durchgeführt wurde.

4. Anordnung nach einem der vorhergehenden Ansprüche,
**dadurch gekennzeichnet,**
**daß** die Einsteckvorrichtung an den Schacht eines Kommunikationsendgerätes zur Aufnahme einer SIM-Karte und die zugehörige SIM-Schnittstelle angepaßt ist und die Steuereinheit die Übertragung der Programme an die dieser SIM-Schnittstelle entsprechende SIM-Ein-/Ausgabe-Schnittstelle anpaßt und steuert.

5. Einsteckvorrichtung (EV) für die Anordnung nach Anspruch 1 mit
a) einem Speicher (PS) für die zu übertragenden Programme
b) einer Steuereinheit (SE) zur Steuerung der Übertragung der Programme auf das elektronische Gerät und zur Anpassung der Übertragung an eine vorhandene Ein-/Ausgabe-Schnittstelle (EAS) am elektronischen Gerät.

6. Einsteckvorrichtung nach Anspruch 5,
bei der die Steuereinheit (SE) unabhängig von dem Programm als digitale Hardware oder als Mikrocontroller mit integriertem Programm realisiert ist.

7. Einsteckvorrichtung nach einem der Ansprüche 5 bis 6 mit
einem nichtflüchtigen Speicher (NS), der die Anzahl der Übertragungen eines Programms erfaßt.

## Claims

1. Arrangement for transferring programs to an electronic unit, comprising:
- a plug-in device, on which a program to be transferred is stored,
- a slot - present on the electronic unit - for receiving the plug-in device with associated interface,
**characterized by**
a controller (SE), which is contained in the plug-in device, for controlling the transfer of the program to the electronic unit after the insertion of the plug-in device into the slot.

2. Arrangement according to Claim 1,
**characterized**
**in that** the plug-in device is adapted to a slot - which is already present for other purposes on the electronic unit - for receiving plug-in cards and the associated interface, and the controller controls and adapts the transfer of the programs to the input/output interface which corresponds to this slot.

3. Arrangement according to either of Claims 1 and 2,
**characterized**
**in that** a non-volatile memory is additionally provided on the plug-in device, which memory registers the number of transfers of the program to electronic units, and the transfer of the program is no longer permitted if a specific number of transfers have been carried out.

4. Arrangement according to one of the preceding claims,
**characterized**
**in that** the plug-in device is adapted to the slot of a communications terminal for receiving a SIM card and the associated SIM interface, and the controller controls and adapts the transfer of the programs to the SIM input/output interface which corresponds to this SIM interface.

5. Plug-in device (EV) for the arrangement according to Claim 1, having
a) a memory (PS) for the programs to be transferred,
b) a controller (SE) for controlling the transfer of the programs to the electronic unit and for adapting the transfer to an existing input/output interface (EAS) on the electronic unit.

6. Plug-in device according to Claim 5,
in which the controller (SE) is realized independently of the program as digital hardware or as a microcontroller with integrated program.

7. Plug-in device according to either of Claims 5 and 6, having
a non-volatile memory (NS), which registers the number of transfers of a program.

## Revendications

1. Dispositif pour transférer des programmes sur un appareil électronique, comprenant :
- un dispositif enfichable sur lequel un programme à transférer est mémorisé,
- un puits disponible sur l'appareil électronique pour le logement du dispositif enfichable avec l'interface correspondante,
**caractérisé par**
une unité de commande (SE) contenue dans le dispositif enfichable pour la commande du transfert du programme sur l'appareil électronique après l'enfichage du dispositif enfichable dans le puits.

2. Dispositif selon la revendication 1,
**caractérisé en ce que**
le dispositif enfichable est adapté à un puits - déjà disponible sur l'appareil électronique pour d'autres utilisations - pour le logement de cartes enfichables et à l'interface correspondante et **en ce que** l'unité de commande adapte et commande le transfert des programmes à l'interface d'entrée/sortie correspondant à ce puits.

3. Dispositif selon l'une des revendications 1 à 2,
**caractérisé en ce que**
une mémoire non volatile est prévue de manière supplémentaire sur le dispositif enfichable, cette mémoire enregistrant le nombre de transferts du programme sur un appareil électronique et **en ce que** le transfert du programme n'est plus admis lorsqu'un certain nombre de transferts a été exécuté.

4. Dispositif selon l'une des revendications précédentes,
**caractérisé en ce que**
le dispositif enfichable est adapté au puits d'un appareil terminal de communication pour le logement d'une carte SIM et à l'interface SIM correspondante et **en ce que** l'unité de commande adapte et commande le transfert des programmes à l'interface SIM d'entrée/sortie correspondant à cette interface SIM.

5. Dispositif enfichable (EV) pour le dispositif selon la revendication 1, avec
a) une mémoire (PS) pour les programmes à transférer
b) une unité de commande (SE) pour la commande du transfert des programmes sur l'appareil électronique et pour l'adaptation du transfert à une interface d'entrée/sortie disponible (EAS) sur l'appareil électronique.

6. Dispositif enfichable selon la revendication 5,
dans lequel l'unité de commande (SE) est réalisée, indépendamment du programme, comme matériel informatique numérique ou comme micro-contrôleur avec programme intégré.

7. Dispositif enfichable selon l'une des revendications 5 à 6, avec
une mémoire non volatile (NS) qui enregistre le nombre de transferts d'un programme.
